# EUROPÄISCHE PATENTSCHRIFT

(11) **EP 0 836 968 B1**
(45) Veröffentlichungstag und Bekanntmachung des Hinweises auf die Patenterteilung: **24.10.2001**
(21) Anmeldenummer: 97115517.1
(22) Anmeldetag: 08.09.1997
(51) Int. Cl.: B60R 21/09, B60T 7/06

(54) **Vorderwagenanordnung**
Arrangement for the front end of a vehicle
Agencement pour la partie avant d'un véhicule

(30) Priorität: 19.10.1996 DE 19643207
(43) Veröffentlichungstag der Anmeldung: 22.04.1998
(73) Patentinhaber: Volkswagen Aktiengesellschaft, 38436 Wolfsburg (DE)
(72) Erfinder: Witte, Bastian, Dr., 38179 Gross Schwülper (DE); Hoffmann, Jürgen, 31234 Plockhorst (DE)

(56) Entgegenhaltungen:
- DE-A- 2 841 988
- DE-A- 19 515 852

## Beschreibung

Die Erfindung bezieht sich auf eine Vorderwagenanordnung gemäß dem Oberbegriff von Anspruch 1.

Durch die Verwendung von Rückhaltesystemen wie Sicherheitsgurten und Airbags, nimmt die Verletzungsschwere bei Frontalunfällen an Kopf und Brust stetig ab. Dadurch treten Verletzungen an den unteren Extremitäten, insbesondere Verletzungen des Fahrerfußes, in den Vordergrund. Um derartige Fußverletzungen zu verringern, kann z. B. das Bremspedal beim Unfall nach vorne auf die Spritzwand hin bewegt werden, um eine freie Vorwärtsbewegung des Fahrerfußes zu ermöglichen.

Bei einem stärkeren Frontalunfall können jedoch der Motor, das Getriebe und der Bremshauptzylinder zusammen in die Fahrerkabine gedrückt werden und dabei schwere Beinverletzungen, vor allem Knieverletzungen verursachen.

Die gattungsbildende DE 28 41 988 C2 schlägt dementsprechend vor, bei einem Frontalunfall die Rückwärtsbewegung eines Federbeindoms auszunutzen, um den Bremshauptzylinder, den Bremskraftverstärker und den Pedalbock mitsamt des Fußhebelwerks zunächst nach hinten zu verschieben, bis der Bremskraftverstärker auf einem unteren Anlagepunkt aufliegt und die gesamte Vorderwagenanordnung anschließend derartig nach hinten zu verkippen, daß die Pedale durch die Schwenkbewegung vom Fahrerfuß weg nach vorne zur Spritzwand gekippt werden. Die Vorderwagenanordnung des Bremshauptzylinders, Bremskraftverstärkers und Pedalbock ist dazu mit einer Solllösestelle am Fahrzeugaufbau verbunden, um bei entsprechend hoher Krafteinwirkung insgesamt verschwenkt zu werden. Die Solllösestelle wird dabei durch am Pedalbock angebrachte Zungen gebildet, die an einem Querträger festgeschraubt sind.

Zwar wird durch das Verschwenken des Lagerbocks mitsamt der Pedalen das Bremspedal vom Fahrerfuß wegbewegt, es besteht jedoch bei stärkeren Auffahrunfällen die Gefahr, daß der Bremshauptzylinder mitsamt dem Bremskraftverstärker und dem Pedalbock so weit in den Fahrgastraum hineingedrückt und hineingeschwenkt wird, daß der Fahrer hierdurch verletzt wird, oder die Lenksäule bricht und beim Fahrer Verletzungen hervorruft. Weiterhin drückt der Federbeindom nur bei einem seitlich versetzten Auffahrunfall den Bremshauptzylinder in gewünschter Weise nach hinten zum Fahrer hin, daß er wegschwenkt. Bei einem direkten, nicht versetzten Auffahrunfall wird eine derartige Verschwenkbewegung nicht erreicht. Ferner ist eine Verschiebung des Federbeindoms zur Fahrgastzelle hin erst bei sehr starken Frontalunfällen und erst nach einer stärkeren Deformation des Vorderbaus des Kraftfahrzeugs zu erwarten, so daß eventuell schon Verletzungen am Fahrerfuß entstanden sind. Beim typischen Frontalunfall werden der Motor mit Getriebe recht frühzeitig gegen den Bremshauptzylinder gedrückt, woraufhin anschließend Motorgetriebe, Bremshauptzylinder und Bremskraftverstärker in den Fahrerraum gedrückt werden, so daß eine Verschwenkung des Hauptzylinders evtl. gar nicht mehr möglich ist, da der Motor bzw. das Getriebe bereits gegen den Hauptbremszylinder drückt.

Der Erfindung liegt die Aufgabe zugrunde, eine Vorderwagenanordnung zu schaffen, die eine hohe Sicherheit des Fahrers bei Frontalunfällen gewährleistet und dennoch kostengünstig zu realisieren ist.

Diese Aufgabe wird durch eine Vorderwagenanordnung nach Anspruch 1 gelöst. Die Unteransprüche beschreiben bevorzugte Weiterbildungen der erfindungsgemäßen Vorderwagenanordnung.

Erfindungsgemäß wird somit die aus dem Bremshauptzylinder, Bremsdruckstange und Bremspedal gebildete Vorderwagenanordnung nach vorne hin weggeschwenkt, wobei die Schwenkbewegung durch eine Zugvorrichtung erreicht wird, die von einer Relativbewegung des Motors oder Getriebes gegenüber dem Fahrzeugaufbau betätigt wird. Da durch eine derartige Zugvorrichtung die Bewegung des Motors oder Getriebes zum Fahrer hin effektiv in eine entsprechende Bewegung zum Wegschwenken des Bremshauptzylinders und des Bremspedals genutzt werden kann, ist ein rechtzeitiges Entfernen des Bremshauptzylinders gewährleistet, so daß bei einem stärkeren Frontalaufprall der Motor und das Getriebe nicht den Bremshauptzylinder festklemmen und zum Fahrer hin schieben können. Durch das Wegschwenken des Bremshauptzylinders wird nunmehr ein Freiraum hinter dem Motor und Getriebe geschaffen, durch den die Wucht des Frontalunfalls aufgefangen werden kann.

Die Schwenkbewegung kann dabei nach Anspruch 2 durch ein Gelenk in der Spritzwand erreicht werden, wobei als Gelenk auch eine entsprechende dünne Stelle in der Spritzwand ausgebildet werden kann.

Die Solllösestelle kann auf vorteilhafte Weise nach Anspruch 8 als formschlüssige, nachgiebige Verbindung der Spritzwand mit dem Bremshauptzylinder bzw. Bremskraftverstärker ausgebildet werden, die insbesondere nach Anspruch 10 durch eine Sicke mit V-förmigen Profil erreicht werden kann, da eine derartige Verbindung kostengünstig hergestellt werden kann, indem z. B. der Endbereich des Bremskraftverstärkers durch Umfalten V-förmig ausgebildet wird und beim Einbau der Bremsanlage die Spritzwand in das V-förmige Profil eingesteckt wird, so daß nur noch am dieser Verbindung gegenüberliegenden Verbindungsbereich Schraubverbindungen zur Befestigung des Bremskraftverstärkers an der Spritzwand eingesetzt werden müssen. Bei der Schwenkbewegung kann alternativ nach Anspruch 4 oder 5 der Pedalbock entweder in den Schwenkvorgang mit einbezogen werden oder nicht einbezogen werden.

Die Erfindung wird im folgenden anhand der beiliegenden Zeichnungen an einigen Ausführungsformen näher erläutert. Es zeigen:
- Figur 1: eine Vorderwagenanordnung gemäß einer ersten Ausführungsform der Erfindung;
- Figur 2: die Vorderwagenanordnung aus Figur 1 bei einem Frontalunfall;
- Figur 3: eine Vorderwagenanordnung gemäß einer zweiten Ausführungsform der Erfindung;
- Figur 4: die Vorderwagenanordnung aus Figur 3 bei einem Frontalunfall;
- Figur 5: eine Schnittansicht durch die Spritzwand entlang der Linie A-A in Figur 3;
- Figur 6: eine Vorderwagenanordnung gemäß einer dritten Ausführungsform der Erfindung;

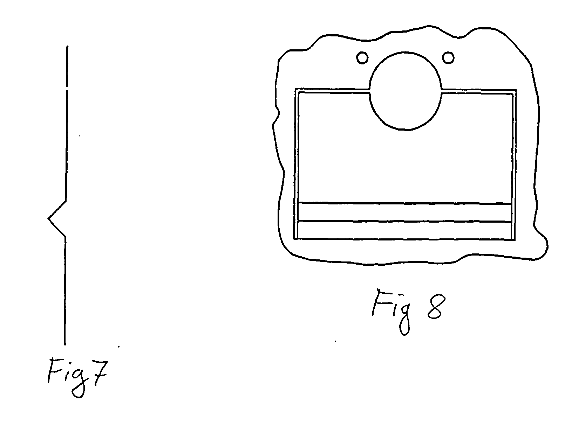

- Figur 7: eine Seitenansicht eines als Drehgelenk ausgebildeten Teils der Spritzwand;
- Figur 8: eine Vorderansicht der Spritzwand aus Figur 7.

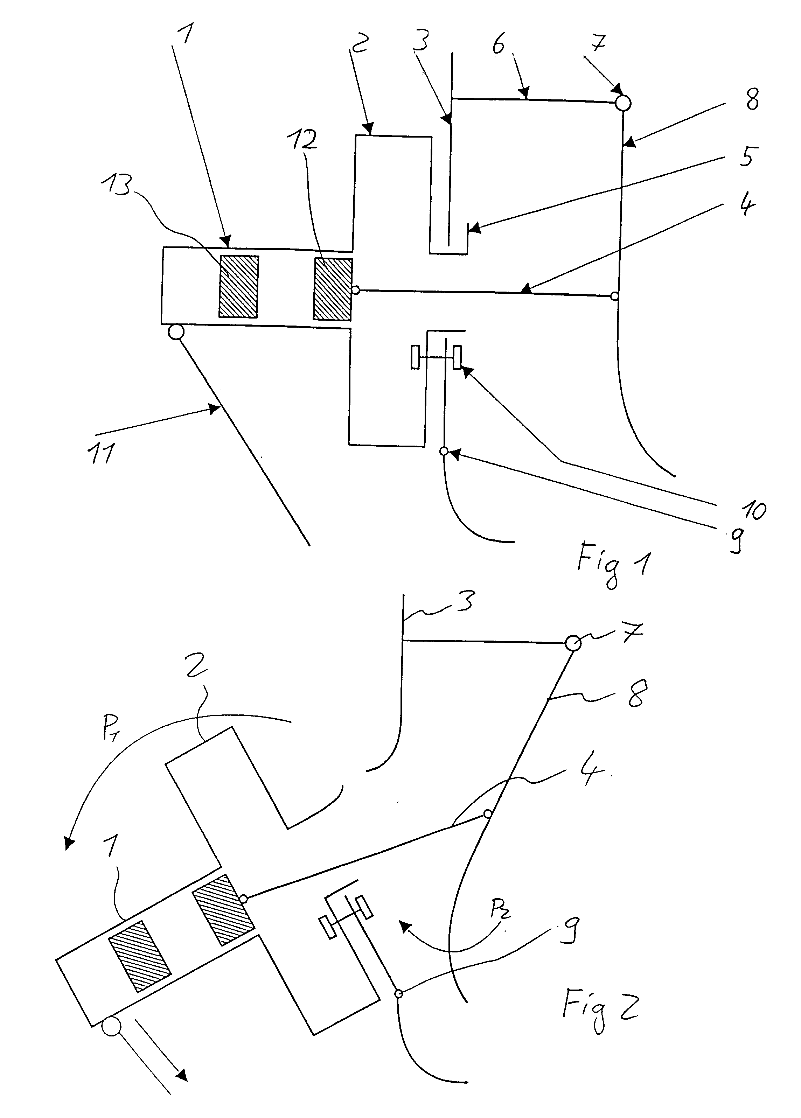

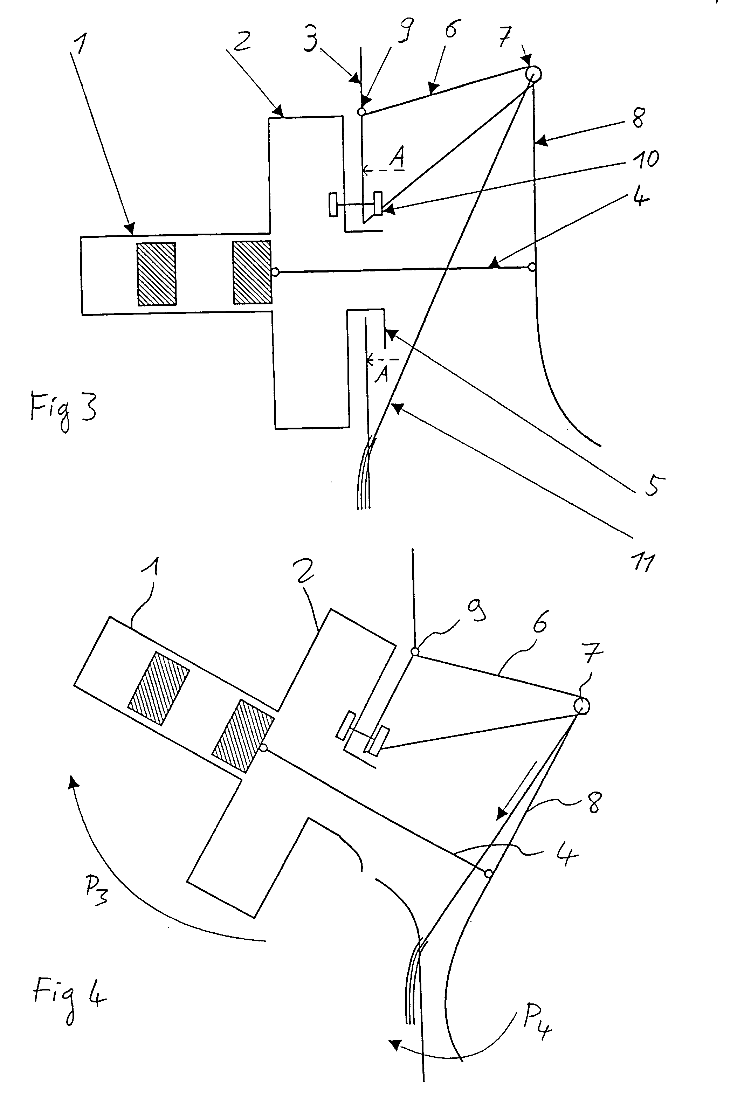

Gemäß Figur 1 ist ein Bremshauptzylinder 1 über einen Bremskraftverstärker 2 mit einer Spritzwand 3 verbunden. Die Spritzwand 3 ist mit einem Fußhebelbock 6 starr verbunden, wobei ein Pedalgelenk 7 eines Bremspedals 8 an dem Fußhebelbock 6 angebracht ist. Das Bremspedal 8 ist über eine Bremsdruckstange 4 in bekannter Weise mit den Bremskolben 12 und 13 verbunden. Der Bremskraftverstärker 2 ist an der Spritzwand 3 an der unteren Seite über eine Schraubverbindung 10 verbunden und weist an der der Schraubverbindung 10 gegenüberliegenden Seite eine Sicke 5 auf, in die die Spritzwand 3 eingesteckt ist.

Unterhalb der Schraubverbindung 10 ist die Spritzwand 3 mit einem Gelenk 9 versehen, das z. B. als Spritzwandverjüngung ausgebildet sein kann.

Am vorderen Ende des Bremshauptzylinders 1 ist eine Zugvorrichtung 11 angebracht, deren anderes Ende im Bereich des Motors angebracht ist und bei einer Relativverschiebung des Motors oder Getriebes gegenüber des Fahrzeugaufbaus bei einem Frontalunfall eine Zugbewegung an der Zugvorrichtung bewirkt. Die Zugvorrichtung 11 kann dabei direkt an dem Motor oder Getriebe bzw. mit einer Lose an Motor oder Getriebe angebracht sein.

Wenn in einem Fahrzeug das Antriebsaggregat derart gelagert ist, das sicher der Schwerpunkt des Antriebes unterhalb der Drehachse des Aggregates befindet (Pendellagerung), wird das vom Motor aufgebrachte Moment oftmals über eine sogenannte Momentenstütze am Fahrzeugaufbau beziehungsweise Hilfsrahmen abgestützt. In diesem Fall kann die Zugvorrichtung auf vorteilhafte Weise an einer derartigen Momentenstütze angebracht sein.

Bei einem Frontalunfall wird durch die Relativverschiebung des Motors bzw. Getriebes gegenüber dem Fahrzeugaufbau eine Zugkraft auf die Zugvorrichtung 11 übertragen, so daß nach Figur 2 der Bremshauptzylinder 1 in Pfeilrichtung P1 nach vorne und unten weggezogen wird. Während der Bremshauptzylinder 1, die Bremszylinder 12 und 13 und der Bremskraftverstärker 2 bei dieser Schwenkbewegung entsprechend dem Pfeil P1 nach vorne und unten weggeschwenkt werden, wird das Bremspedal 8 über die Bremsdruckstange 4 nach vorne hin weggezogen, wobei es eine Schwenkbewegung um das Pedalgelenk 7 in Richtung des Pfeils P2 durchführt. Somit wird in dieser Ausführungsform nicht die ganze Vorderwagenanordnung nach vorne weggeschwenkt, sondern lediglich das Bremssystem, wobei durch die gelenkige Verbindung der Bremsdruckstange 4 erreicht wird, daß auch das Bremspedal mit hinreichender Sicherheit vom Fahrerfuß weg nach vorne gezogen wird. Da nicht der Fußhebelbock 6 mitgeschwenkt wird, ist die zu bewegende Masse relativ klein, so daß eine schnelle Wegschenkbewegung gewährleistet wird. Das wegzuschwenkende Bremssystem bedarf weiterhin lediglich eines geringen Freiraums an seiner Unterseite, wobei nach Wegschwenken des aus Bremshauptzylinders 1 und Bremskraftverstärkers 2 gebildeten Bremssystems ein Freiraum für den Motor und das Getriebe geschaffen ist, in den diese im weiteren Verlauf der Eindrückbewegung beim Frontalunfall eindringen können, ohne andere Bauteile in Richtung des Fahrerraums zu verschieben.

Figur 3 zeigt eine weitere Ausführungsform, bei dem die Zugvorrichtung 11 am Fußhebelbock 6 angebracht ist, und zwar im Bereich des Bremspedalgelenks 7. Das Drehgelenk 9 ist oberhalb der Bremsdruckstange 4 angeordnet, wobei der Bremskraftverstärker 2 in der Spritzwand 3 unterhalb des Drehgelenks mittels einer Schraubverbindung 10 befestigt ist, und die Befestigung unterhalb der Bremsdruckstange 4 über eine Sicke 5 erreicht wird, in die in entsprechender Weise die Spritzwand 3 gesteckt ist.

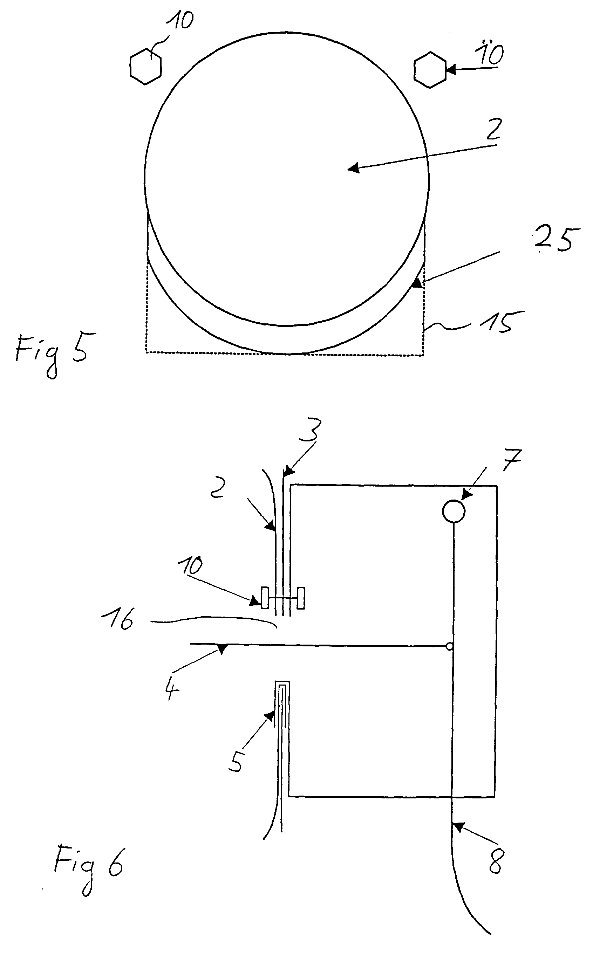

Bei einem Frontalunfall wird bei dieser Vorderwagenanordnung gemäß Figur 4 der Bremshauptzylinder 1 mitsamt der Bremskolben, der Bremskraftverstärker 2, die Pedaldruckstange 4, der Fußhebelbock 6 mitsamt Bremspedal 8 um das Drehgelenk 9 in Richtung des Pfeils P3 geschwenkt, so daß die Schwenkbewegung des Bremspedals 8 entlang der Pfeilrichtung P4 der Gesamtschwenkbewegung P3 entspricht. Die durch die Sicke 5 und die Spritzwand 3 gebildete nachgiebige formschlüssige Verbindung wird auch in diesem Fall aufgebogen.

Die Verbindung zwischen dem Bremskraftverstärker 2 und der Spritzwand 3 der Ausführungsformen der Figur 1 bzw. der Figur 3 kann dabei nach Figur 5 ausgebildet werden. An einer Seite, z. B. wie in Figur 5 gezeigt oberhalb der Bremsdruckstange, wird die Verbindung über zwei Schrauben 10 erreicht, während an der anderen Seite am Bremskraftverstärker 2 eine Sicke ausgebildet ist, die eine runde Kontur 25 oder eine durch eine gestrichelte Linie gezeigte rechteckige Kontur 15 aufweisen kann. Derartige Konturen ermöglichen zwar eine gute Lösbarkeit der Verbindung, können jedoch gegebenenfalls ein Klappern des Bremskraftverstärkers 2 an der Spritzwand nicht verhindern, falls die Anbindung nicht mit der erwünschten Genauigkeit erfolgt. Für diesen Fall bietet sich eine Sicke mit V-förmigem Profil an.

Gemäß Figur 6 ist der Bremskraftverstärker 2 oberhalb der Bremsdruckstange 4 an die Spritzwand 3 geschraubt und unterhalb der Bremsdruckstange 4 mit einer Sicke über die Spritzwand 3 gelegt. Der Pedalbock 6 ist dabei oberhalb der Bremsdruckstange 4 ebenfalls an der Spritzwand 3 verschraubt und unterhalb der Bremsdruckstange 4 mit einer Sicke 15 versehen, die über die Sicke 5 des Bremskraftverstärkers gelegt ist.

Beim Einbau wird der Bremshauptzylinder 1 mit Bremskraftverstärker 2 von der Vorderseite in eine Montageöffnung 16 der Spritzwand 3 gesteckt, wobei der Bremskraftverstärker 2 mit einer Sicke 5 versehen sein kann, die in bereits beschriebener Weise unterhalb der Montageöffnung 16 über die Spritzwand 3 gesteckt wird. Die Schraubverbindung 10 kann dabei derartig ausgebildet werden, daß mit dem Bremskraftverstärker 2 Stehbolzen verbunden sind, die durch entsprechende Öffnungen in der Spritzwand 3 gesteckt werden.

Anschließend wird von der Hinterseite der Fußhebelbock 6 mit der Fußhebelanordnung aufgesetzt. Dabei wird die Sicke 5 unterhalb der Montageöffnung 16 über den Bremskraftverstärker 2 gesteckt, und die freien Enden der Stehbolzen des Bremskraftverstärkers 2 werden von der Hinterseite mit Muttern befestigt. Auf diese Weise wird eine schnelle und einfache Montage sowohl des Bremssystems als auch des Fußhebelwerks an der Spritzwand 3 ermöglicht.

## Patentansprüche

1. Vorderwagenanordnung, mit
einem Bremshauptzylinder (1), der an einer Spritzwand (3) des Fahrzeugaufbaus befestigt ist,
einem Bremspedal (8), das über eine Bremsdruckstange (4) mit Bremskolben (12, 13) in dem Bremshauptzylinder (1) verbunden ist,
wobei das Bremspedal (8) und der Bremshauptzylinder (1) über eine Solllösestelle (5) mit dem Fahrzeugaufbau verbunden sind und das Bremspedal und der Bremshauptzylinder bei einer Relativverschiebung des Motors oder Getriebes gegenüber des Fahrzeugaufbau derartig schwenkbar sind, daß das Bremspedal vom Fahrerfuß weg im wesentlichen in Fahrtrichtung nach vorne geschwenkt wird,
**dadurch gekennzeichnet, daß**
eine eine Zugkraft übertragende Zugeinrichtung (11) vorgesehen ist derartig, daß der Bremshauptzylinder (1) und das Bremspedal (8) bei der Relativbewegung des Motors oder Getriebes gegenüber dem Fahrzeugaufbau bei einem Frontalunfall in Fahrtrichtung nach vorne wegschwenkbar sind.

2. Vorderwagenanordnung nach Anspruch 1, **dadurch gekennzeichnet, daß** in der Spritzwand (3) ein Gelenk (9) vorgesehen ist, um das der Bremshauptzylinder (1) und das Bremspedal (8) schwenkbar sind.

3. Vorderwagenanordnung nach Anspruch 2, **dadurch gekennzeichnet, daß** zwischen dem Bremshauptzylinder (1) und dem Bremspedal (8) ein Bremskraftverstärker (2) vorgesehen ist, der mit der Spritzwand (3) über die Solllösestelle (5) verbunden ist.

4. Vorderwagenanordnung nach einem der Ansprüche 1 bis 3, **dadurch gekennzeichnet, daß** ein das Bremspedal tragender Fußhebelbock (6) gegenüber der Schwenkbewegung starr angeordnet ist.

5. Vorderwagenanordnung nach einem der Ansprüche 1 bis 3, **dadurch gekennzeichnet, daß** ein das Bremspedal (8) tragender Fußhebelbock (6) bei der Schwenkbewegung mit verschwenkbar ist.

6. Vorderwagenanordnung nach einem der Ansprüche 1 bis 5, **dadurch gekennzeichnet, daß** die Zugvorrichtung (11) derartig angeordnet ist, daß sie bei der Relativverschiebung des Motors oder Getriebes gegenüber dem Fahrzeugaufbau am Bremshauptzylinder (1) angreift.

7. Vorderwagenanordnung nach Anspruch 5, **dadurch gekennzeichnet, daß** die Zugvorrichtung (11) bei einer Zugbewegung an einem Drehgelenk (7) des Bremspedals (8) angreift.

8. Vorderwagenanordnung nach einem der Ansprüche 1 bis 7, **dadurch gekennzeichnet, daß** die Solllösestelle als formschlüssige, nachgiebige Verbindung der Spritzwand (3) mit dem Bremshauptzylinder (1) oder dem Bremskraftverstärker (2) ausgebildet ist.

9. Vorderwagenanordnung nach Anspruch 8, **dadurch gekennzeichnet, daß** an dem Bremshauptzylinder (1) oder dem Bremskraftverstärker (2) eine Sicke (5) angeordnet oder ausgebildet ist, in die die Spritzwand (3) gesteckt ist.

10. Vorderwagenanordnung nach Anspruch 9, **dadurch gekennzeichnet, daß** die Sicke (5) ein V-förmiges Profil aufweist.

## Claims

1. Arrangement for the front end of a vehicle, having
a master brake cylinder (1) which is attached to a front wall (3) of the vehicle body,
a brake pedal (8) which is connected by a brake pressing rod (4) to brake pistons (12, 13) in the master brake cylinder (1),
wherein the brake pedal (8) and the master brake cylinder (1) are connected to the vehicle body by an intended release point (5) and, in the event of a relative displacement of the engine or transmission with respect to the vehicle body, the brake pedal and the master brake cylinder can pivot in such a way that the brake pedal is pivoted away from the driver's foot, forwards substantially in the direction of travel,
**characterised in that**
a tractive device (11) transmitting a tractive force is provided in such a way that the master brake cylinder (1) and the brake pedal (8) can pivot away forwards in the direction of travel in the event of the relative displacement of the engine or transmission with respect to the vehicle body during a head-on accident.

2. Arrangement for the front end of a vehicle according to claim 1, **characterised in that** a joint (9) is provided in the front wall (3), about which joint the master brake cylinder (1) and the brake pedal (8) can pivot.

3. Arrangement for the front end of a vehicle according to claim 2, **characterised in that** between the master brake cylinder (1) and the brake pedal (8) a brake booster (2) is provided which is connected to the front wall (3) via the intended release point (5).

4. Arrangement for the front end of a vehicle according to any one of claims 1 to 3, **characterised in that** a foot pedal bracket (6) supporting the brake pedal is disposed in a rigid manner with respect to the pivot movement.

5. Arrangement for the front end of a vehicle according to any one of claims 1 to 3, **characterised in that** a foot pedal bracket (6) supporting the brake pedal (8) can also pivot during the pivoting movement.

6. Arrangement for the front end of a vehicle according to any one of claims 1 to 5, **characterised in that** the tractive device (11) is disposed in such a way that, during the relative displacement of the engine or transmission with respect to the vehicle body, it engages with the master brake cylinder (1).

7. Arrangement for the front end of a vehicle according to claim 5, **characterised in that** the tractive device (11) engages a rotational joint (7) of the brake pedal (8) during a tractive movement.

8. Arrangement for the front end of a vehicle according to one of claims 1 to 7, **characterised in that** the intended release point is formed as a form-locking, yielding connection of the front wall (3) to the master brake cylinder (1) or the brake booster (2).

9. Arrangement for the front end of a vehicle according to claim 8, **characterised in that** a bead (5) is disposed or formed on the master brake cylinder (1) or brake booster (2), into which bead the front wall (3) is inserted.

10. Arrangement for the front end of a vehicle according to claim 9, **characterised in that** the bead (5) has a V-shaped profile.

## Revendications

1. Agencement pour la partie avant d'un véhicule, comportant
un maître-cylindre de frein (1), qui est fixé sur un tablier avant (3) de la carrosserie du véhicule,
une pédale de frein (8), qui est reliée à des pistons de frein (12, 13) du maître-cylindre de frein (1) par l'intermédiaire d'une tige de pression de frein (4),
la pédale de frein (8) et le maître-cylindre de frein (1) étant reliés à la carrosserie du véhicule par l'intermédiaire d'un point de rupture prédéterminé (5), et la pédale de frein et le maître-cylindre de frein pouvant pivoter lors d'un déport relatif du moteur ou de la boîte de vitesses par rapport à la carrosserie du véhicule, de telle sorte que la pédale de frein (8) soit écartée du pied du conducteur et pivotée pour l'essentiel vers l'avant dans le sens de la marche,
**caractérisé en ce que**
il est prévu un dispositif de traction (11) transmettant une force de traction de telle sorte que, lors d'un choc frontal provoquant le mouvement relatif du moteur ou de la boîte de vitesses par rapport à la carrosserie du véhicule, le maître-cylindre de frein (1) et la pédale de frein (8) puissent pivoter vers l'avant dans le sens de la marche.

2. Agencement selon la revendication 1, **caractérisé en ce qu'**une articulation (9) est prévue dans le tablier avant (3), autour de laquelle le maître-cylindre de frein (1) et la pédale de frein (8) peuvent être pivotés.

3. Agencement selon la revendication 2, **caractérisé en ce que**, entre le maître-cylindre de frein (1) et la pédale de frein (8), il est prévu un servofrein (2) qui est relié au tablier avant (3) par l'intermédiaire du point de rupture prédéterminé (5).

4. Agencement selon l'une quelconque des revendications 1 à 3, **caractérisé en ce qu'**un support de pédale (6) portant la pédale de frein est relié rigidement par rapport au mouvement de pivotement.

5. Agencement selon l'une quelconque des revendications 1 à 3, **caractérisé en ce qu'**un support de pédale (6) portant la pédale de frein (8) peut pivoter lors du mouvement de pivotement.

6. Agencement selon l'une quelconque des revendications 1 à 5, **caractérisé en ce que** le dispositif de traction (11) est disposé de telle sorte que, lors du déport relatif du moteur ou de la boîte de vitesses par rapport à la carrosserie du véhicule, il agisse sur le maître-cylindre de frein (1).

7. Agencement selon la revendication 5, **caractérisé en ce que**, lors d'un mouvement de traction, le dispositif de traction (11) agit sur une articulation à charnière (7) de la pédale de frein (8).

8. Agencement selon l'une quelconque des revendications 1 à 7, **caractérisé en ce que** le point de rupture prédéterminé est réalisé sous la forme d'une liaison flexible assurée par complémentarité de formes entre le tablier avant (3) et le maître-cylindre de frein (1) ou le servofrein (2).

9. Agencement selon la revendication 8, **caractérisé en ce qu'**une moulure (5) est prévue ou pratiquée dans le maître-cylindre de frein (1) ou dans le servofrein (2), dans laquelle est emboîté le tablier avant (3).

10. Agencement selon la revendication 9, **caractérisé en ce que** la moulure (5) a un profil en forme de V.
